Europäisches Patentamt

(19) European Patent Office

Office européen des brevets

(11) Veröffentlichungsnummer: **0 169 298**
**B1**

(12) **EUROPÄISCHE PATENTSCHRIFT**

(45) Veröffentlichungstag der Patentschrift:
07.02.90

(21) Anmeldenummer: 85102355.6

(22) Anmeldetag: 01.03.85

(51) Int. Cl.⁵: **G 01 N   1/28**, G 03 C   1/72,
G 03 F   7/027, C 08 F   2/46

(54) Photopolymerisierbares Material für das Einbetten von Schliffproben.

(30) Priorität: 14.07.84 DE 3426043

(43) Veröffentlichungstag der Anmeldung:
29.01.86 Patentblatt 86/05

(45) Bekanntmachung des Hinweises auf die Patenterteilung:
07.02.90 Patentblatt 90/06

(84) Bennante Vertragsstaaten:
AT CH DE FR GB LI SE

(86) Entgegenhaltungen:
EP-A-0 026 420
EP-A-0 059 970
EP-A-0 104 825

CHEMICAL ABSTRACTS, Band 100, Nr. 24, 11. Juni 1984, Seite 37, Spalte 1, Zusammenfassungsnr. 192827c, Columbus, Ohio, US; C. BOERSIG et al.: "Shrinkage, cracking and rounding-off of edges during cold embedding"

CHEMICAL ABSTRACTS, Band 74, Nr. 23, 7. Juni 1971, Seite 116, Spalte 1, Zusammenfassungsnr. 121242s, Columbus, Ohio, US; H. KUSHIDA "New method for embedding with 2-hydroxypropylmethacrylate"

Die Akte enthält technische Angaben, die nach dem Eingang der Anmeldung eingereicht wurden und die nicht in dieser Patentschrift enthalten sind.

(73) Patentinhaber: Kulzer GmbH
Philipp-Reis-Strasse 8
D-6393 Wehrheim (TS.)1 (DE)

(72) Erfinder: Angrick, Michael, Dr.
Richard-Wagner-Strasse 10
D-1000 Berlin 10 (DE)
Erfinder: Trautwein, Ulrich
Kransbergerstrasse 12
D-6393 Wehrheim 3 (DE)

(74) Vertreter: Heinen, Gerhard, Dr.
Heraeusstrasse 12-14
D-6450 Hanau/Main (DE)

## Beschreibung

Die Erfindung betrifft ein kalthärtendes methacrylathaltiges Material für das Einbetten von Schliffproben.

Für das Einbetten von Schliffproben für metallographische Untersuchungen werden üblicherweise gegebenenfalls unter Druck kalthärtende gieß- und knetbare Epoxid-, Polyester- und Acrylharze in Form eines Zwei- oder Dreikomponenten-Materials verwendet. Vor Gebrauch müssen die einzelnen Komponenten genau dosiert und dann gründlich miteinander vermischt werden. Die Verarbeitungszeit der nicht lagerfähigen Mischungen beträgt einige Minuten.

Aus J. Electron Microsc. 1970, 19(3), 281 - 282, referiert in Chemical Abstracts, Band 74, Nr. 23, 121 242 (1971), ist es bekannt, biologisches Material unter Verwendung eines Prepolymers aus 2-Hydroxypropylmethacrylat und Polyäthylenglykoldimethacrylat einzubetten.

In Metallwissenschaft und Technik, 38. Jahrgang, Heft 2, 1984, 133 - 138, referiert in Chemical Abstracts, Band 100, Nr. 24, 192 827 (1984), wird über Untersuchungen des Schrumpfverhaltens, der Spaltenbildung und der Kantenabrundung beim Einbetten metallographischer Proben mit Kalteinbettmitteln auf der Basis von ungesättigten Polyester-, Epoxid- und Methacrylatharzen berichtet.

Auch Schmelzklebstoffe auf Thermoplast-Basis werden für die Schliffeinbettung benutzt. Sie besitzen den Vorteil eines Einkomponenten-Materials; jedoch ist das Verfahren der Einbettung aufwendiger und die Erwärmung der Proben größer als bei den kalthärtenden Einbettmitteln.

Zur Verbesserung der Haftung zwischen einzubettender Probe und Einbettmittel können die Proben mit einem Haftvermittler vorbehandelt werden.

Es ist die Aufgabe der Erfindung, ein kalthärtendes methacrylathaltiges Material mit gutem Fließverhalten zu finden, das eine lange Verarbeitungszeit besitzt und spaltfreie, hochtransparente Schliffeinbettungen ermöglicht.

Das die Lösung der Aufgabe darstellende Material ist dadurch gekennzeichnet, daß es 5 - 90 Gewichts-% Dimethacrylat, 5 - 90 Gewichts-% Prepolymer auf Basis eines acrylierten Epoxidharzes und/oder Prepolymer auf Basis eines acrylierten Polyurethans und 0,5 - 3 Gewichts-% Photopolymerisationskatalysator enthält.

Als Dimethacrylat haben sich die Diurethandimethacrylate besonders bewährt. Bevorzugt wird das durch Reaktion von 1 mol 2,2,4-Trimethylhexamethylendiisocyanat mit 2 mol 2-Hydroxyäthylmethacrylat erhaltene Diurethandimethacrylat.

Ist die Viskosität des Materials zu hoch, so können ihm niedermolekulare Methacrylate, besonders Triäthylenglykoldimethacrylat und/oder 2-Hydroxyäthylmethacrylat, zugesetzt werden.

Beim Einbetten hat sich ein Material, das zusätzlich einen Haftvermittler enthält, besonders bewährt. Der Haftvermittler besteht vorzugsweise aus dem Reaktionsprodukt aus Caprolactondioldimethacrylat und Phosphorpentoxid und kann in einer Menge von 0,5 - 3 Gewichts-% in dem Material enthalten sein.

Der in dem Material in einer Menge von 0,5 - 3 Gewichts-% vorhandene Photopolymerisationskatalysator kann irgendein bekannter Radikale bildender Photopolymerisationskatalysator sein. Besonders bewährt haben sich Benzoylalkanole, zum Beispiel 2-Hydroxy-2-methyl-1-phenylpropanon und 1-(4-Dodecylphenyl)-2-hydroxy-2-methylpropanon.

Das Material kann noch einen Polymerisationsverzögerer, vorzugsweise γ-Terpinen in einer Menge bis zu 1 Gewichts-%, enthalten.

Als besonders geeignet hat sich ein Material, das 50 - 70 Gewichts-% Diurethandimethacrylat, 5 - 20 Gewichts-% Prepolymer auf Basis eines acrylierten Epoxidharzes und/oder Prepolymer auf Basis eines acrylierten Polyurethans, 5 - 25 Gewichts-% niedermolekulares Methacrylat, 0,5 - 3 Gewichts-% Photopolymerisationskatalysator und 0,5 - 3 Gewichts-% Haftvermittler enthält, erwiesen.

Die Aushärtung erfolgt durch Bestrahlung mit Licht einer Wellenlänge von 300 - 400 nm in einem homogenen Lichtfeld. Für die Bestrahlung eignen sich alle bekannten Strahlungsquellen, die Licht dieser Wellenlänge aussenden.

Beim Einbetten von Schliffproben mit dem erfindungsgemäßen Material ist kein Abmessen und Mischen wie bei einem Zwei- oder Dreikomponenten-Material erforderlich. Eine Geruchsbelästigung tritt nicht auf, denn es enthält keine niedrigsiedenden Bestandteile. Da das Material erst bei Bestrahlung mit Licht aushärtet, ist seine Verarbeitungszeit praktisch unbegrenzt. Die Schliffeinbettungen sind glasklar, spaltfrei und randscharf.

Zur näheren Erläuterung werden in den folgenden Beispielen Material gemäß der Erfindung - als Lösungen I, II und III bezeichnet -, bevorzugte Arbeitsweisen für das Einbetten- als Arbeitsweisen A, B und C bezeichnet - und das Einbetten von zwei metallischen Proben für die metallographische Untersuchung beschrieben.

## Beispiel 1

Material für das Einbetten

### 1. Lösung I

70 Gewichts-Teile
Diurethandimethacrylat aus 1 mol 2,2,4-Trimethylhexamethylendiisocyanat und 2 mol 2-Hydroxyäthylmethacrylat

6 Gewichts-Teile
Prepolymer auf Basis eines acrylierten Epoxidharzes

4 Gewichts-Teile
Prepolymer auf Basis eines acrylierten Polyurethans

15 Gewichts-Teile
Triäthylenglykoldimethacrylat

3

5 Gewichts-Teile
2-Hydroxyäthylmethacrylat
3 Gewichts-Teile
Reaktionsprodukt aus Caprolactondioldimethacrylat und Phosphorpentoxid
1 Gewichts-Teile
1-(4-Dodecylphenyl)-2-hydroxy-2-methyl-propanon

**2. Lösung II**

65 Gewichts-Teile
Diurethandimethacrylat aus 1 mol 2,2,4-Trimethylhexamethylendiisocyanat und 2 mol 2-Hydroxyäthylmethacrylat
15 Gewichts-Teilen
Prepolymer auf Basis eines acrylierten Epoxidharzes
20 Gewichts-Teilen
2-Hydroxyäthylmethacrylat
1,5 Gewichts-Teilen
2-Hydroxy-2-methyl-1-phenyl-propanon
0,5 Gewichts-Teilen
γ-Terpinen

**3. Lösung III**

70 Gewichts-Teile
Diurethandimethacrylat aus 1 mol 2,2,4-Trimethylhexamethylendiisocyanat und 2 mol 2-Hydroxyäthylmethacrylat
12 Gewichts-Teile
Prepolymer auf Basis eines acrylierten Epoxidharzes
18 Gewichts-Teile
2-Hydroxyäthylmethacrylat
2 Gewichts-Teile
Reaktionsprodukt aus Caprolactondioldimethacrylat und Phosphorpentoxid
1,8 Gewichts-Teile
2-Hydroxy-2-methyl-1-phenyl-propanon
0,3 Gewichts-Teile
γ-Terpinen

**Beispiel 2**

Arbeitsweisen

1. Arbeitsweise A

Auf die in bekannter Weise für das Einbetten vorbereitete metallische Schliffprobe wird die den Haftvermittler enthaltende Lösung I durch Sprühen, Tauchen oder Pinseln aufgetragen und durch Bestrahlung mit Licht einer Wellenlänge von 300 - 400 nm ausgehärtet. Die überzogene Schliffprobe wird in eine aus einem für Licht der Wellenlänge von 300 - 400 nm durchlässigen Material, zum Beispiel Polyäthylen, bestehende Einbettform, die die Lösung II enthält, gebracht. Die Aushärtung erfolgt durch Bestrahlung

4

mit Licht einer Wellenlänge von 300 - 400 nm.
Werden für das Einbetten der Schliffprobe mehr als 15 g der Einbettlösung benötigt, so wird sie schichtweise in die Form gegeben und ausgehärtet.

2. Arbeitsweise B

Die in bekannter Weise für das Einbetten vorbereitete metallische Schliffprobe wird in eine die Lösung III enthaltende Einbettform, die aus einem für Licht der Wellenlänge 300 - 400 nm durchlässigen Material, um Beispiel Polyäthylen, besteht, gegeben. Die Aushärtung erfolgt durch Bestrahlen mit Licht einer Wellenlänge von 300 - 400 nm.

Auch bei dieser Arbeitsweise ist es notwendig, die Einbettlösung schichtweise in die Form zu geben und auszuhärten, wenn für das Einbetten der Probe mehr als 15 g gebraucht werden.

3. Arbeitsweise C

Auf die in bekannter Weise für das Einbetten vorbereitete metallische Probe wird die Lösung III durch Sprühen, Tauchen oder Pinseln aufgetragen und durch Bestrahlung mit Licht einer Wellenlänge von 300 - 400 nm ausgehärtet. Die überzogene Schliffprobe wird in eine aus einem für Licht der Wellenlänge von 300 - 400 nm durchlässigen Material, zum Beispiel Polyäthylen, bestehende Einbettform, die die Lösung III enthält, gebracht. Die Aushärtung erfolgt durch Bestrahlung mit Licht einer Wellenlänge von 300 - 400 nm.
Werden für das Einbetten der Schliffprobe mehr als 15 g der Einbettlösung benötigt, so wird sie schichtweise in die Form gegeben und ausgehärtet.

**Beispiel 3**

Einbetten einer Probe von einem Kupfer-Stab

Die Probe eines Kupfer-Stabes mit einem Durchmesser von 20 mm und einer Höhe von 5 mm wird mit einem Tuch abgewischt, in Aceton mit Ultraschall 10 Minuten lang gereinigt, mit Aceton gespült und getrocknet.
Die gereinigte Probe wird mit der Lösung I eingepinselt und zur Polymerisation der Lösung einem Strahlungsfeld einer Wellenlänge im Bereich von 300 - 400 nm ausgesetzt.
Dann wird die beschichtete Probe in eine Form aus Polyäthylen, die 10 g der Lösung II enthält, gebracht und durch Bestrahlung - wie beschrieben - die Lösung II durch Polymerisation ausgehärtet.
Die ausgehärtete Einbettungsmasse haftet gut am Kupfer und ist glasklar, abriebfest und frei von Spannungsrissen.

## Beispiel 4

Einbetten einer Probe von einer Leiterplatte aus mit Kupfer beschichtetem glasfaserverstärktem Epoxidharz

Die 1 cm$^2$ große, ein Bohrloch (Durchmesser 1 mm) aufweisende Probe wird mit einem Tuch abgewischt, in Aceton mit Ultraschall 10 Minuten lang gereinigt, mit Aceton gespült und getrocknet.

Die gereinigte Probe wird senkrecht in eine Form aus Polyäthylen, die mit 8 g der Lösung III gefüllt ist, gebracht. Dann wird die Form einem Strahlungsfeld einer Wellenlänge im Bereich von 300 - 400 nm ausgesetzt und die Lösung III durch Polymerisation ausgehärtet.

Die ausgehärtete Einbettungsmasse haftet gut an der Probe und ist glasklar abriebfest und frei von Spannungsrissen.

## Patentansprüche

1. Kalthärtendes methacrylathaltiges Material für das Einbetten von Schliffproben, dadurch gekennzeichnet, daß es 5 - 90 Gewichts-% Dimethacrylat, 5 - 90 Gewichts-% Prepolymer auf Basis eines acrylierten Epoxidharzes und/oder Prepolymer auf Basis eines acrylierten Polyurethans und 0,5 - 3 Gewichts-% Photopolymerisationskatalysator enthält.

2. Material nach Anspruch 1, dadurch gekennzeichnet, daß das Dimethacrylat ein Diurethandimethacrylat ist.

3. Material nach Anspruch 2, dadurch gekennzeichnet, daß das Diurethandimethacrylat das Reaktionsprodukt aus 1 mol 2,2,4-Trimethylhexamethylendiisocyanat und 2 mol 2-Hydroxyäthylmethacrylat ist.

4. Material nach einem der vorhergehenden Ansprüche, dadurch gekennzeichnet, daß es ein niedermolekulares Methacrylat enthält.

5. Material nach Anspruch 4, dadurch gekennzeichnet, daß das niedermolekulare Methacrylat Triäthylenglykoldimethacrylat und/oder 2-Hydroxyäthylmethacrylat ist.

6. Material nach einem der vorhergehenden Ansprüche, dadurch gekennzeichnet, daß es einen Haftvermittler enthält.

7. Material nach Anspruch 6, dadurch gekennzeichnet, daß der Haftvermittler aus dem Reaktionsprodukt aus Caprolactondioldimethacrylat und Phosphorpentoxid besteht.

8. Material nach einem der vorhergehenden Ansprüche, dadurch gekennzeichnet, daß es als Photopolymerisationskatalysator ein Benzoylalkanol enthält.

9. Material nach Anspruch 8, dadurch gekennzeichnet, daß der Photopolymerisationskatalysator 2-Hydroxy-2-methyl-1-phenylpropanon oder 1-(4-Dodecylphenyl)-2-hydroxy-2-methylpropanon ist.

10. Material nach einem der vorhergehenden Ansprüche, dadurch gekennzeichnet, daß es bis zu 1 Gewichts-% γ-Terpinen enthält.

11. Material nach einem der vorhergehenden Ansprüche, dadurch gekennzeichnet, daß es 50 - 70 Gewichts-% Diurethandimethacrylat, 5 - 20 Gewichts-% Prepolymer auf Basis eines acrylierten Epoxidharzes und/oder Prepolymer auf Basis eines acrylierten Polyurethans, 5 - 25 Gewichts-% niedermolekulares Methacrylat, 0,5 - 3 Gewichts-% Photopolymerisationskatalysator und 0,5 - 3 Gewichts-% Haftvermittler enthält.

## Claims

1. Cold-curing material containing methacrylate for embedding ground specimens, characterised in that it contains 5 - 90 weight dimethacrylate, 5 - 90 weight % prepolymer based on an acrylated epoxy resin and/or prepolymer based on an acrylated polyurethane and 0.5 - 3 weight % photopolymerisation catalyst.

2. Material according to claim 1, characterised in that the dimethacrylate is a diurethanedimethacrylate.

3. Material according to claim 2, characterised in that the diurethanedimethacrylate is the reaction product of 1 mole of 2,2,4-trimethylhexamethylenediisocyanate and 2 moles of 2-hydroxyethylmethacrylate.

4. Material according to one of the preceding claims, characterised in that it contains a low molecular methacrylate.

5. Material according to claim 4, characterised in that the low molecular methacrylate is triethylene glycol dimethacrylate and/or 2-hydroxyethylmethacrylate.

6. Material according to one of the preceding claims, characterised in that it contains an adhesion promoter.

7. Material according to claim 6, characterised in that the adhesion promoter consists of the reaction product of caprolactonedioldimethacrylate and phosphorus pentoxide.

8. Material according to one of the preceding claims, characterised in that it contains a benzoyl alkanol as photopolymerisation catalyst.

9. Material according to claim 8, characterised in that the photopolymerisation catalyst is 2-hydroxy-2-methyl-1-phenylpropanone or 1-(4-dodecylphenyl)-2-hydroxy-2-methylpropanone.

10. Material according to one of the preceding claims, characterised in that it contains up to 1 weight % of γ-terpinene.

11. Material according to one of the preceding claims, characterised in that it contains 50 - 70 weight % diurethanedimethacrylate, 5 - 20 weight % prepolymer based on an acrylated epoxy resin and/or prepolymer based on an acrylated polyurethane, 5 - 25 weight % low molecular methacrylate, 0.5 - 3 weight % photopolymerisation catalyst and 0.5 - 3 weight % of adhesion promoter.

**Revendications**

1. Matériau contenant un méthacrylate durcissant à froid pour l'enrobage d'échantillons polis, caractérisé en ce qu'il contient 5 - 90 % en poids d'un diméthacrylate, 5 - 90 % en poids d'un prépolymère à base d'une résine époxydique acrylée et/ou d'un prépolymère à base d'un polyuréthane acrylé et 0,5 - 3 % en poids d'un catalyseur de photopolymérisation.

2. Matériau selon la revendication 1, caractérisé en ce que le diméthacrylate est un diuréthanediméthacrylate.

3. Matériau selon la revendication 2, caractérisé en ce que le diuréthanediméthacrylate est le produit de réaction de 1 mole de 2,2,4-triméthylhexaméthylènediisocyanate et de 2 moles de méthacrylate de 2-hydroxyéthyle.

4. Matériau selon l'une des revendications précédentes, caractérisé en ce qu'il contient un méthacrylate de bas poids moléculaire.

5. Matériau selon la revendication 4, caractérisé en ce que le méthacrylate de bas poids moléculaire est le diméthacrylate de triéthylèneglycol et/ou le méthacrylate de 2-hydroxyéthyle.

6. Matériau selon l'une des revendications précédentes, caractérisé en ce qu'il contient un agent adhésif.

7. Matériau selon la revendication 6, caractérisé en ce que l'agent adhésif consiste en le produit de réaction de diméthacrylate de caprolactonediol et de pentoxyde de phosphore.

8. Matériau selon l'une des revendications précédentes, caractérisé en ce qu'il contient comme catalyseur de photopolymérisation un benzoylalcanol.

9. Matériau selon la revendication 8, caractérisé en ce que le catalyseur de photopolymérisation est la 2-hydroxy-2-méthyl-1-phénylpropanone ou la 1-(4-dodécylphényl)-2-hydroxy-2-méthylpropanone.

10. Matériau selon l'une des revendications précédentes, caractérisé en ce qu'il contient jusqu'à 1 % en poids de γ-terpinène.

11. Matériau selon l'une des revendications précédentes, caractérisé en ce qu'il contient 50 à 70 % en poids de diuréthane-diméthacrylate, 5 à 20 % en poids de prépolymère à base d'une résine époxydique acrylée et/ou de prépolymère à base d'un polyuréthane acrylé, 5 à 25 % en poids de méthacrylate de bas poids moléculaire, 0,5 à 3 % en poids de catalyseur de photopolymérisation et 0,5 à 3 % en poids d'agent adhésif.